(19) Europäisches Patentamt
European Patent Office
Office européen des brevets

(11) **EP 1 700 434 B1**

(12) **EUROPÄISCHE PATENTSCHRIFT**

(45) Veröffentlichungstag und Bekanntmachung des Hinweises auf die Patenterteilung:
**19.06.2013   Patentblatt 2013/25**

(21) Anmeldenummer: **04804813.6**

(22) Anmeldetag: **14.12.2004**

(51) Int Cl.:
***H04L 12/66*** *(2006.01)*

(86) Internationale Anmeldenummer:
**PCT/EP2004/053455**

(87) Internationale Veröffentlichungsnummer:
**WO 2005/067223 (21.07.2005 Gazette 2005/29)**

(54) **VERFAHREN ZUR BESTIMMUNG VON GRENZWERTEN FÜR EINE VERKEHRSKONTROLLE IN KOMMUNIKATIONSNETZEN MIT ZUGANGSKONTROLLE**

METHOD FOR DETERMINING THRESHOLD VALUES USED FOR CHECKING TRAFFIC IN COMMUNICATION NETWORKS FEATURING ACCESS CONTROL

PROCEDE POUR DETERMINER DES VALEURS LIMITES POUR UN CONTROLE DU TRAFIC DANS DES RESEAUX DE COMMUNICATION A CONTROLE D'ACCES

(84) Benannte Vertragsstaaten:
**DE FR GB PL**

(30) Priorität: **02.01.2004   DE 102004001008**

(43) Veröffentlichungstag der Anmeldung:
**13.09.2006   Patentblatt 2006/37**

(73) Patentinhaber: **Nokia Siemens Networks GmbH & Co. KG**
**81541 München (DE)**

(72) Erfinder:
• **KOPF, Stefan**
**97299 Zell am Main (DE)**
• **MENTH, Michael**
**97255 Oellingen (DE)**

(56) Entgegenhaltungen:
**EP-A- 1 059 792       WO-A-02/07381**
**WO-A-03/026229**

**Beschreibung**

Die Erfindung betrifft ein Verfahren für die Festsetzung eines Grenzwerts zur Verkehrsbeschränkung in einem mit Knoten und Links gebildeten Kommunikationsnetz mit auf Grenzwerten beruhenden Zugangskontrollen auf Basis eines erwarteten Verkehrsaufkommen.

Die Kontrolle bzw. Beschränkung des Verkehrs - Datenverkehr sowie Sprachverkehr - ist für verbindungslos operierende Kommunikationsnetze ein zentrales Problem, wenn Verkehr mit hohen Dienstgüteanforderungen, wie z.B. Sprachdaten, übertragen werden sollen. Geeignete Mechanismen zur Kontrolle des Verkehrs werden derzeit von Netzwerkspezialisten, Vermittlungstechnikern und Internet-Experten untersucht.

Die derzeit möglicherweise wichtigste Entwicklung auf dem Gebiete der Netzwerke ist die Konvergenz von Sprach- und Datennetzen. In Zukunft sollen Übertragungsdienste mit verschiedensten Anforderungen über dasselbe Netz übertragen wird. Dabei zeichnet sich ab, dass ein Grossteil der Kommunikation über Netze in Zukunft über verbindungslos arbeitende Datennetze, deren wichtigster Vertreter die sogenannten IP-Netze (IP: Internet Protocol) sind, vorgenommen werden wird. Die Übertragung von sogenanntem Echtzeitverkehr, z.B. Sprach- oder Videodaten über Datennetze unter Einhaltung von Dienstgütemerkmalen ist Voraussetzung für eine erfolgreiche Netzkonvergenz. Bei der Übertragung von Echtzeitverkehr über Datennetze müssen insbesondere bezüglich der Verzögerungszeiten und der Verlustrate von Datenpaketen enge Grenzen eingehalten werden. Dies wird in der Druckschrift WO-A2-03/026229 gezeigt.

Eine Möglichkeit für die Übertragung in Echtzeit über Datennetze unter Einhaltung von Dienstgütemerkmalen ist eine Verbindung durch das ganze Netz zu schalten, d.h. eine dem Dienst vorangehende Festlegung und Reservierung der benötigten Betriebsmittel bzw. Ressourcen. Die Bereitstellung von hinreichenden Ressourcen zu Garantie der Dienstmerkmale wird dann für jeden Verbindungsabschnitt (auch mit dem englischen Wort "Link" bezeichnet) überwacht. Technologien, die auf diese Weise vorgehen, sind beispielsweise das ATM-Verfahren (ATM: asynchronous transfer mode) oder das MPLS-Protokoll (MPLS: Multiprotocol Label Switching), welches die Festlegung von Pfaden durch IP-Netze vorsieht. Diese Verfahren haben jedoch den Nachteil hoher Komplexität und - im Vergleich zu herkömmlichen Datennetzen - geringer Flexibilität. Zustandsinformationen über die durch das Netz vermittelten Flows müssen bei den einzelnen Verbindungsabschnitten gespeichert bzw. überprüft werden.

Ein Verfahren, welches die Komplexität der verbindungsabschnittsweisen Überprüfung bzw. Kontrolle von Ressourcen vermeidet, ist das sogenannte Diff-Serv-Konzept. Dieses Konzept wird im Englischen als "stateless" bezeichnet, d.h. dass keine Zustandsinformationen über Verbindungen oder Flows entlang des Übertragungspfades vorgehalten werden muss. Stattdessen sieht das Diff-Serv-Konzept nur eine Zugangskontrolle am Netzrand vor. Bei dieser Zugangskontrolle können Pakete nach Maßgabe ihrer Dienstmerkmale verzögert, und - falls notwendig - verworfen werden. Man spricht in diesem Zusammenhang auch von traffic conditioning oder policing, von traffic shaping und traffic engineering. Das Diff-Serv-Konzept erlaubt so die Unterscheidung von verschiedenen Verkehrsklassen - man spricht hier häufig von Classes of service -, die entsprechend der Übertragungsanforderungen priorisiert oder einer geringeren Priorität behandelt werden können. Letztlich kann aber bei Datenübertragung mit Hilfe des Diff-Serv-Konzepts die Einhaltung von Dienstmerkmalen für Echtzeitverkehr nicht garantiert werden. Es stehen keine Mechanismen zur Verfügung, den über das Netz übertragenen Echtzeitverkehr so anzupassen, dass verlässliche Aussagen über die Einhaltung der Dienstmerkmale möglich wären.

Es ist daher wünschenswert, den über ein Datennetz übertragenen Echtzeitverkehr so gut zu kontrollieren, dass einerseits Dienstmerkmale garantiert werden können und andererseits eine optimale Ressourcenausnutzung stattfindet, ohne dafür die Komplexität von durch das Netz geschalteten Verbindungen in Kauf nehmen zu müssen.

Die Erfindung hat zur Aufgabe, ein optimiertes Verfahren für die Festlegung von Grenzwerten für die Verkehrsbegrenzung in einem Kommunikationsnetz anzugeben.

Die Aufgabe wird durch ein Verfahren nach Anspruch 1 gelöst.

Es wird von einem mit Links und Knoten gebildeten Kommunikationsnetz (z.B. ein IP (Internet Protocol) Netz) ausgegangen, bei dem zumindest ein Teil des in das Kommunikationsnetz gelangenden Verkehrs (z.B. der Verkehr einer Verkehrsklasse) einer Zugangskontrolle mittels eines Grenzwertes unterzogen wird. Dabei gibt der Grenzwert eine Grenze vor, deren Überschreiten durch Abweisen von der Zugangskontrolle unterzogenen Verkehr verhindert wird. Auf diese Weise kann vermieden werden, dass durch eine zu hohe Verkehrsmenge im Kommunikationsnetz Engpässe auftreten, die eine Minderung der Dienstgüte der durch das Kommunikationsnetz bereitgestellten Transportdienste verursachen würden. Es wird davon ausgegangen, dass für das Kommunikationsnetz durch die verwendeten Grenzwerte unterschiedliche Zugangskontrollen durchgeführt werden, die von den Wegen innerhalb des Netzes, auf denen der Verkehr transportiert werden soll, abhängen. Ein Beispiel für derartige Zugangskontrollen sind Kontrollen, die jeweils einen Grenzwert für ein Paar aus Eingangsknoten und Ausgangsknoten vorsehen. Verkehr, der zwischen diesem Eingangsknoten und dem Ausgangskonten befördert werden soll, wird einer Zugangskontrolle mit dem entsprechenden Grenzwert unterzogen. Ein Überschreiten des Grenzwertes führt dann zur Abweisung, während evtl. anderer Verkehr, der zwischen einem anderen Knotenpaar befördert werden soll, zugelassen wird. Ein anderes Beispiel ist sind Zugangskontrollen, welche jeweils zwei Grenzwerte verwenden, wobei einer dem Eingangsknoten und ein anderer dem Ausgangskonten zugewiesen ist. Der Verkehr wird dann zugelassen, wenn sowohl für den Eingangsknoten als auch für den Ausgangsknoten das Ergebnis der Zugangskontrolle positiv ist.

Die Erfindung behandelt die Festlegung der Grenzwerte für die Zugangskontrollen. Eine derartige Festlegung sollte in dem Sinne fair sein, dass nicht Übertragungsrichtungen innerhalb des Kommunikationsnetzes gegenüber anderen benachteiligt werden, d.h. das in einer Richtung transportierter Verkehr mit einer höheren Wahrscheinlichkeit abgewiesen wird als der einer anderen Richtung. Zu diesem Zweck wird von einem Verkehrsaufkommen ausgegangen (welches z.B. mittels einer Verkehrsmatrix quantitativ fassbar ist), welches z.B. aus Erfahrungswerten oder gemessenen Werten bestimmt wurde. Man kann z.B. annehmen, dass der tatsächliche Verkehr um dieses erwartete Verkehrsaufkommen schwankt (z.B. Schwankungen, welche einer Poisson-Verteilung gehorchen). Mittels aus der Literatur bekannter Formeln (z.B. Kaufman und Roberts in James Roberts, Ugo Mocci, and Jorma Virtamo, Broadband Network Teletraffic - Final Report of Action COST 242, Springer, Berlin, Heidelberg, 1996) kann dann die Wahrscheinlichkeit $p_b$ berechnet werden, mit welcher einer Zugangskontrolle mit einem Grenzwert (bzw. Budget) b unterzogener Verkehr abgewiesen wird. Unten wird diese Wahrscheinlichkeit auch als Blockierwahrscheinlichkeit bezeichnet. Eine faire Festsetzung von Grenzwerten wird hier verstanden als Festlegung von Grenzwerten, die zu möglichst gleichen Blockierwahrscheinlichkeiten für die verschiedenen Zugangskontrollen führen.

Erfindungsgemäß wird vorhandene freie Kapazität im Kommunikationsnetz für Verkehr verfügbar gemacht. Dabei wird beim zu transportierenden Verkehr je nach der Zugangskontrolle bzw. dem entsprechenden Grenzwert unterschieden. D.h. es werden die Verkehrsströme gemeinsam betrachtet, welche derselben Zugangskontrolle unterzogen werden, z.B. weil sie identische Eingangs- und Ausgangsknoten haben. Die freie Kapazität wird für bestimmte Verkehrsströme verfügbar gemacht, indem der bzw. die entsprechenden Grenzwerte eine Zuteilung von freier Kapazität erfahren. Diese Zuteilung entspricht dann einer Erhöhung des Grenzwertes, d.h. einer Verringerung der Blockierwahrscheinlichkeit (bei gegebenen Verkehrsaufkommen). Um möglichst ungleiche Blockierwahrscheinlichkeiten zu vermeiden, wird dem Grenzwert mit der größten Blockierwahrscheinlichkeit eine Übertragungskapazitätsanteil (unten auch als Übertragungskapazitätsinkrement bezeichnet) zugewiesen, falls auf den Links hinreichend freie Kapazität zur Verfügung steht. Bei gleicher Blockierwahrscheinlichkeit kann das zu transportierende Verkehrsvolumen auf den der Zugangskontrolle bzw. dem Grenzwert zugehörigen Wegen als Kriterium verwendet werden (das höhere Verkehrsvolumen gibt den Ausschlag). Dabei werden die Links betrachtet, welche für den Transport des Verkehrs, welcher aufgrund der Zugangskontrolle zugelassen wird, verwendet werden. Z.B. bei Mehrwegerouting fällt in der Regel ein Teil des aufgrund der Zuordnung von dem Übertragungskapazitätsanteil zusätzlich ins Netz gelassenen Verkehrs auf den einzelnen Links an. Dies kann bei der Überprüfung, ob auf den einzelnen Links ausreichend freie Bandbreite zur Verfügung steht, berücksichtigt werden.

Die erfindungsgemäße Zuweisung von einem Übertragungskapazitätsanteil zu einem Grenzwert kann schrittweise für eine Menge von Grenzwerten (z.B. für alle Grenzwerte) durchgeführt werden. Dabei ist es sinnvoll, nach einer Zuweisung von einem Übertragungskapazitätsanteil die entsprechende Blockierwahrscheinlichkeit neu zu berechnen, so dass im nächsten Schritt ein anderer Grenzwert (mit einer niedrigeren Blockierwahrscheinlichkeit) eine Zuweisung von Bandbreite bzw. Kapazität erfährt. Weiter ist es sinnvoll, Grenzwerte, bei denen eine Zuweisung von einem Übertragungskapazitätsanteil mangels freier Kapazität auf den Links nicht möglich war, bei folgenden Schritten nicht mehr zu betrachten, d.h. aus der Menge der betrachteten Grenzwerte zu entfernen.

Entsprechend Weiterbildungen (Ansprüche 5-9) wird der Übertragungskapazitätsanteil bzw. das Übertragungskapazitätsinkrement vorteilhaft festgesetzt. Bei einer iterativen Zuweisung von Übertragungskapazität an die Grenzwerte ist es erstrebenswert, möglichst große Übertragungskapazitätsanteile zu verwenden, um die Anzahl der Iterationen in Grenzen zu halten. Auf der anderen Seite sollte ein Übertragungskapazitätsanteil nicht so groß sein, dass nicht genügend freie Bandbreite für eine faire Zuweisung von Übertragungskapazität zu den anderen grenzwerten verbleibt. Ein sinnvoller Ansatz ist, das Übertragungskapazitätsinkrement proportional zu dem erwarteten Verkehrsaufkommen (welches der entsprechenden Zugangskontrolle mit dem Grenzwert unterzogen wird) oder gleich einem minimalen Übertragungskapazitätsinkrement (letzteres z.B. wenn das anders bestimmte Übertragungskapazitätsinkrement kleiner ist als das minimale Übertragungskapazitätsinkrement) festzulegen. Das Übertragungskapazitätsinkrement kann beispielsweise gleich oder proportional dem erwarteten Verkehrsaufkommen multipliziert mit einer relativen auf einem Link vorhandenen freien Bandbreite (freie Bandbreite geteilt durch auf dem Link zu befördemdes Verkehrsaufkommen) gesetzt werden. Es kann dann jeweils das Minimum der auf den verwendeten Links verfügbaren Bandbreite den Grenzwerten zugewiesen werden.

Auf diese Weise wird die freie Bandbreite nach Maßgabe des zu befördernden Verkehrsvolumens (welches den einzelnen Zugangskontrollen bzw. Grenzwerten zugeordnet ist) aufgeteilt. Diese Aufteilung ist hinsichtlich gleicher Blockierwahrscheinlichkeiten noch verbesserbar, indem bei der Festsetzung des Übertragungskapazitätsinkrement für einen Grenzwert überprüft wird, ob durch die Aufteilung der freien Bandbreite für die anderen noch betrachteten Grenzwerte durch die entsprechende Zuteilung ihres Übertragungskapazitätsanteils bzw. Übertragungskapazitätsinkrements gleiche oder geringere Blockierwahrscheinlichkeiten zu erzielen sind und anderenfalls das Übertragungskapazitätsinkrement für den betrachteten Grenzwert so lange erniedrigt wird, bis diese Bedingung erfüllt ist.

Gemäß anderen vorteilhaften Weiterbildungen (Ansprüche 10-13) werden Störszenarien betrachtet. Es ist erstrebenswert, nicht nur im Normalbetrieb, sondern auch im Falle von Störungen oder Ausfällen die Verkehrsmenge im Netz so beschränkt zu haben, dass keine Überlastsituationen z.B. als Folge von Verkehrsumverteilung als Reaktion auf einen Ausfall vorkommen. Dazu wird eine Menge von Störszenarien betrachtet, die z.B. durch Ausfall eines Links oder Knotens gegeben sind. Man kann z.B. die Aufteilung der im Falle der einzelnen Störszenarien vorhandene Bandbreite der einzelnen Links auf die Grenzwerte betrachten und das Übertragungskapazitätsinkrements entsprechend dem Minimum für alle Störfälle festlegen.

Das Übertragungskapazitätsinkrement kann auch bei der Einbeziehung von Störszenarien proportional zu dem zu transportierenden Verkehrsaufkommen festgesetzt werden, z.B. indem es gleich oder proportional dem erwarteten Verkehrsaufkommen multipliziert mit einer störfallabhängigen freien Kapazität auf einem Link dividiert durch den im Störfall über den Link zu transportierenden Verkehr, welcher einer Zugangskontrolle mit den betrachteten Grenzwerten unterzogen wird. Eine entsprechende Bestimmung des Übertragungskapazitätsinkrements kann für alle für alle Links, welche beim Transport von einer Zugangskontrolle mit dem aktuell betrachteten Grenzwert unterzogen werden, durchgeführt werden. Das für die Zuweisung (unter Voraussetzung hinreichender Bandbreite) verwendete Übertragungskapazitätsinkrement ergibt sich dann als das Minimum der Übertragungskapazitätsinkremente, wobei das Minimum bzgl. der Störszenarien und der Links genommen wird. Damit ist sichergestellt, dass bei jedem (d.h. auch dem "worst case") Störszenarium auf allen für den Transport verwendeten Links keine Überlast auftritt. Falls das Minimum der Übertragungskapazitätsinkremente unterhalb eines minimalen Übertragungskapazitätsinkrement fällt, kann das minimale Übertragungskapazitätsinkrement anstelle des bestimmten Übertragungskapazitätsinkrement verwendet werden.

Im Folgenden wird der Erfindungsgegenstand im Rahmen eines Ausführungsbeispiels anhand von Figuren näher erläutert. Es zeigen:

Fig. 1: ein Ablaufdiagramm für ein Verfahren zur Zuweisung von freier Kapazität zu einem Grenzwert für eine Zugangskontrolle

Fig. 2: ein Ablaufdiagramm für ein Verfahren zur Festsetzung eines Übertragungskapazitätsanteils für ein Verfahren entsprechend Fig. 1

Fig. 3 ein Ablaufdiagramm für ein beschleunigtes Verfahren zur Festsetzung von Übertragungskapazitätsanteilen

Es wird von einem Kommunikationsnetz ausgegangen, welches zu transportierenden Verkehr Zugangskontrollen unterzieht. Im Rahmen des Ausführungsbeispiels werden Zugangskontrollen in Abhängigkeit des Eintrittspunktes und des Austrittspunktes des zu transportierenden Verkehr unterschieden. Jedem Paar aus Eintrittspunkt und Austrittspunkt (d.h. zwei Randpunkte bzw. Randknoten) ist dabei ein Grenzwert (bzw. ein Budget) für den zulässigen Verkehr zugeordnet. Dieser Grenzwert entspricht einer dem zwischen den zugehörigen Randpunkten zu transportierenden Verkehr zur Verfügung stehenden maximalen Übertragungskapazität. Die beschriebene Vorgehensweise zur Beschränkung der Übertragungskapazität ermöglicht eine bessere Verteilung und Beherrschung der in dem Kommunikationsnetz transportierten Verkehrsströme.

Die Erfindung hat zum Thema, wie die Grenzwerte für die Zugangskontrollen geeignet zu wählen sind bzw. welche Kapazitäten auf den Links des Kommunikationsnetzes für die einzelnen Zugangskontrollen bzw. für den zwischen den zugehörigen Randpunkten transportierten Verkehr reserviert werden sollen.

Um geeignete Grenzwerte zu ermitteln wird von einem erwarteten Verkehrsaufkommen ausgegangen (beispielsweise beschrieben durch eine Verkehrsmatrix), welches eine Aussage über den mittleren zwischen zwei Randpunkten zu transportierenden Verkehr macht. Es wird zudem angenommen, dass dieses erwartete Verkehrsaufkommen Schwankungen aufweist, die z.B. mittels einer Poisson-Verteilung um den Mittelwert berücksichtigt werden. Auf Basis der Verteilung des erwarteten Verkehrsaufkommens um einen Mittelwert lässt sich für eine Zugangskontrolle mittels eines Grenzwertes die Wahrscheinlichkeit für eine Nichtzulassung von Verkehr berechnen. Im Folgenden wird dafür auch der Ausdruck Blockierwahrscheinlichkeit verwendet.

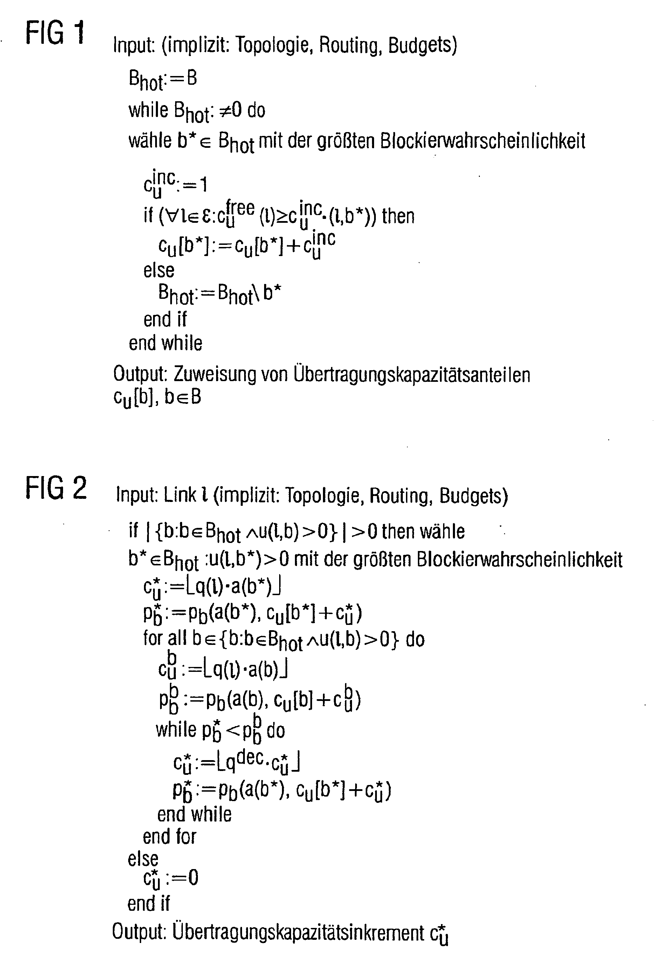

In Fig. 1 ist gezeigt, wie eine Zuweisung von Kapazität zu einem Grenzwert bzw. dem entsprechenden Paar von Randpunkten vorgenommen werden kann. Dabei wird sukzessive Grenzwerten freie Kapazität auf den Links zugewiesen. Die Menge der in einem Schritt betrachteten Grenzwerte ist mit $B_{hot}$ bezeichnet. In das Verfahren gehen implizit die Topologie des Kommunikationsnetzes, das im Netz verwendete Routing (z.B. Einwegrouting oder Mehrwegerouting) und die Art der Zugangskontrollen bzw. der verwendeten Grenzwerte ein. Das Verfahren entsprechend Fig. 1 läuft wie folgt ab:

Solange die Menge der betrachteten Grenzwerte $B_{hot}$ nicht leer ist, wird der Grenzwert (bzw. das Budget) b*, welches die größte Blockierwahrscheinlichkeit aufweist, betrachtet. Falls es Grenzwerte mit gleicher Blockierwahrscheinlichkeit gibt, kann das erwartete Verkehrsaufkommen zwischen den zugehörigen Randpunkten (bzw. der Anteil des erwarteten Verkehrsaufkommens, welcher einer Zugangskontrolle mit dem entsprechenden Grenzwert unterzogen wird) als weiteres Kriterium für die Auswahl verwendet werden (der Grenzwert mit der geringsten Blockierwahrscheinlichkeit, der das höchste erwartete Verkehraufkommen hat, wird ausgewählt). Anschließend wird ein Über-tragungskapazitätsanteil bzw. ein Übertragungskapazitätsinkrement $c_u^{inc}$ festgelegt bzw. festgesetzt. Wenn für alle Links 1 der Menge E der Links, welche für die Übertragung von Verkehr genutzt werden, welcher aufgrund der Zugangskontrolle mittels des Grenzwertes b* zugelassen wird, ausreichend freie Kapazität für die entsprechende Kapazitätserhöhung vorhanden ist, wird die dem Grenzwert zugewiesene bzw. zugeordnete Kapazität um das Kapazitätsinkrement $c_u^{inc}$ erhöht. Mathematisch ausgedrückt muss für alle Links 1 der Menge E

$$(1) \quad c_u^{free}(1) \ \geqq \ c_u^{inc} \ * \ u(1,b*)$$

erfüllt sein. Dabei ist u(l,b*) der Anteil des im Rahmen der Zugangskontrolle mittels b* zugelassenen Verkehrs, der über den Link 1 übertragen wird. Bei Einwegrouting ist u(l,b*) = 1. Bei Mehrwegerouting ist u(l,b*) dagegen in der Regel kleiner als 1. Wenn die obige Bedingung (1) für alle Links 1 aus E erfüllt ist, wird die dem Grenzwert b* zugewiesene Kapazität entsprechend erhöht:

$$(2) \quad c_u(b*) = \bar{c}_u(b*) \ + \ c_u^{inc} \ .$$

Anderenfalls wird b* bei folgenden Schritten bzw. Iterationen nicht mehr betrachtet:

$$(3) \quad B_{hot} = B_{hot}/b*.$$

Wenn die Menge $B_{hot}$ leer ist, ist das Verfahren beendet, d.h. den Grenzwerten b wurden Kapazitäten $c_u(b)$ zugeordnet.

Das in Fig. 1 beschriebene Verfahren lässt sich beschleunigen, indem der Übertragungskapazitätsanteil $c_u^{inc}$ maximiert wird. Eine Möglichkeit besteht darin, den Übertragungskapazitätsanteil $c_u^{inc}$ für den Grenzwert b proportional zu dem Durchschnittswert a(b) des der Zugangskontrolle mit dem Grenzwert b unterzogenen Verkehrs zu setzen, z.B.

$$(4) \quad c_u^{inc} = \max(1, (q(1)*a(b)/h))$$

Dabei steht 1 für ein minimales Übertragungskapazitätsinkrement,

$$q(1) = \ c_u^{free}(1) \ / \ a_{hot}(1),$$

wobei

$a_{hot}(1) = \Sigma \ a(b)$, Summe über alle b aus $B_{hot}(1)$ und

h ist ein Steuerfaktor, durch welches sich das Verfahren einstellen und die Anzahl der Schritte regeln lässt. Eine mögliche Wahl für h ist 2. q(1) ist eine Art linkabhängiges Maß für das Verhältnis zwischen freier Bandbreite $c_u^{free}(l)$ auf diesen Link und des über Grenzwerte b akkumulierten Verkehrs $a_{hot}(l)$, wobei von den betrachteten Grenzwerten $B_{hot}$ diejenigen berücksichtigt werden, welche für Zugangskontrollen für über den Link 1 übertragenen Verkehr verantwortlich zeichnen (d.h. $B_{hot}(l)$).

Dieses Vorgehen führt nicht notwendigerweise zu einem Satz Grenzwerten mit in etwas gleichen Blockierwahrscheinlichkeiten (entspricht einer fairen Festsetzung von Grenzen), weil Grenzwerte b mit einem kleinen a(b) relativ mehr Bandbreite brauchen, um entsprechende Blockierwahrscheinlichkeiten zu erzielen.

Ein Ansatz, die durch (4) beschriebene Festlegung eines Übertragungskapazitätsanteils in Hinblick auf eine faire Festsetzung von Grenzwerten zu verbessern, ist, sichere Übertragungskapazitätsanteile zu berechnen, dass eine Zuweisung des Übertragungskapazitätsanteils noch Zuweisungen zu den anderen betrachteten Grenzwerten zulässt, die diesen anderen Grenzwerte eine vergleichbare Blockierwahrscheinlichkeit ermöglicht. Eine mögliche Realisierung ist in Fig. 2 beschrieben. Dabei bezeichnet $p_b*$ die Blockierwahrscheinlichkeit des Grenzwertes b*, welche von dem bei b* erwarteten Verkehrsaufkommen a(b*) und der b* zugewiesenen Kapazität $c_u(b*)$ bzw. der zugewiesenen Kapazität erhöht um das Übertragungskapazitätsinkrement $c_u(b*) + c_u*$ abhängt. Das Übertragungskapazitätsinkrement $c_u*$ wird zunächst entsprechend (4) (mit h = 1) bestimmt und dann so lange dekrementiert

$$(5) \quad c_u{}^* = q^{dec} * c_u{}^*, \text{ wobei } q^{dec} \text{ ein Faktor kleiner 1 ist,}$$

bis die Blockierwahrscheinlichkeit $p_b{}^*$ höher ist als die Blockierwahrscheinlichkeiten, die die anderen betrachteten Grenzwerte b bei einer Zuweisung einer nach Maßgabe der a(b) angepassten Übertragungskapazität erreichen können. Es ist also bei der Verwendung des in Fig. 2 berechneten Übertragungskapazitätsinkrement bzw. Übertragungskapazitätsanteils sichergestellt, dass noch genügend freie Kapazität für die anderen betrachteten Grenzwerte b aus $B_{hot}(1)$ für vergleichbare Blockierwahrscheinlichkeiten $p_b{}^b$ zur Verfügung steht.

Eine im Vergleich zu Fig. 2 aufwandsarmere Vorgehensweise zur Festsetzung eines Übertragungskapazitätsanteils für einen Grenzwert b* ist die Wahl

$$(6) \quad c_u{}^{inc} = \max(1, \min(q(l)*a(b^*)/h)),$$

wobei das Minimum min über alle Links 1 genommen wird, für die $u(l,b^*) > 0$ ist. Die Verwendung von (6) in dem Verfahren gemäß Fig. 1 ist ein Kompromiss zwischen Fairness und Aufwand. Durch Wahl von h kann eine situationsabhängige Anpassung erfolgen.

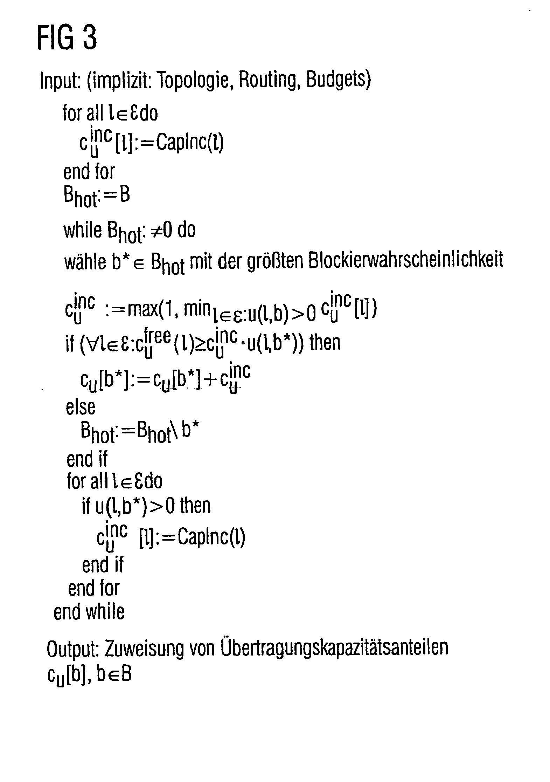

In Fig. 3 ist eine Modifikation des in Fig. 1 dargestellten Verfahrens gezeigt. Dabei werden nur sichere Übertragungskapazitätsanteile CapInc(l) (CapInc: Calculation of a suitable link capacity increment) verwendet, welche entsprechend Fig. 2 oder Formel (6) berechnet werden.

Der Erfindungsgegenstand kann dahingehend erweitert werden, dass Ausfälle oder Störungen kompensiert werden können. Die Idee ist, Kapazität bzw. Bandbreite für Störfälle bereitzuhalten. Es sei S eine Menge von Störszenarien, gegeben durch den Ausfall wenigstens eines Links 1 oder eines Knotens. Die Funktion u(s,1,b) beschreibe dann, welcher Anteil des der Zugangskontrolle mittels des Grenzwertes b unterzogenen Verkehrs im Störfall s über den Link 1 geleitet wird. Man kann jetzt mittels des in Fig. 1 dargestellten Verfahrens für alle Störszenarien s E S Übertragungskapazitätsanteile $c_u(s,b)$ in Abhängigkeit der Störszenarien s E S bestimmen und davon das Minimum nehmen, d.h. $c_u(b) = \min_{s \in S} c_u(s,b)$.

Eine aufwandärmere Vorgehensweise für die Berücksichtigung von Störszenarien bei der Bestimmung bzw. Festsetzung von dem Übertragungskapazitätsanteil bzw. Übertragungskapazitätsinkrement $c_u{}^{inc}$ ist im Folgenden angegeben:

Man setzt

(7) $c_u{}^{free}(s,l) = c_u(l) - \Sigma c_u(b) * u(s,l,b)$, wobei die Summe über alle $b \in B_{hot}$ läuft. Es wird abhängig von Störszenario s und vom Link l ein Übertragungskapazitätsinkrement $c_u{}^{free}(s,l)$ definiert, indem von der auf dem Link 1 zur Verfügung stehenden Kapazität $c_u(l)$ die bereits Grenzwerten b zugeordnete Kapazitäten auf dem Link l subtrahiert werden (für Budget bzw. Grenzwert b ist die zugeordnete Kapazität $c_u(b)$ und u(s,1,b) die anteilsmäßige Nutzung des Links 1 im Störszenario s). Die von den untersuchten Grenzwerten $B_{hot}$ kommenden mittleren aggregierten, auf Link 1 und Störszenario s bezogenen Daten- bzw. Verkehrsströme sind

(8) $a_{hot}(s,l) = \Sigma a(b) * u(s,l,b)$, wobei die Summe über alle $b \in B_{hot}$ läuft. Das Verhältnis q(s,l) von freier Kapazität zu zu übertragenden Verkehr ergibt sich dann als

$$(9) \quad q(s,l) = c_u{}^{free}(s,l) / a_{hot}(s,l).$$

Schließlich wird

$$(10) \quad c_u{}^{inc} = \max(1, \min(q(s,l)*a(b)/h)),$$

wobei das Minimum min über alle Störszenarien s und über alle Links 1 genommen wird, für die $u(s,1,b) > 0$ ist. Bei Anwendung von (10) in dem in Fig. 1 beschriebenen Verfahren wird die Bedingung

$$(1) \quad c_u{}^{free}(l) \geq c_u{}^{inc} * u(l,b^*)$$

zu

$$(11) \quad c_u^{free}(s,l) \geq c_u^{inc} * u(s,l,b^*).$$

**Patentansprüche**

1. Verfahren für die Zuweisung von Übertragungskapazität ($c_u(b^*)$) zu einem Grenzwert ($b^*$) zur Verkehrsbeschränkung in einem mit Knoten und Links (1) gebildeten Kommunikationsnetz mit auf einer Menge (B) von Grenzwerten (b) beruhenden Zugangskontrollen, denen Übertragungskapazitäten ($c_u(b)$) zugeordnet sind, auf Basis eines erwarteten Verkehrsaufkommens (a(b)), **dadurch gekennzeichnet, dass**

   - für denjenigen Grenzwert ($b^*$) aus der Menge der Grenzwerte (B), der nach Maßgabe des erwarteten Verkehrsaufkommens ($a(b^*)$) bei einer Zugangskontrolle mittels des Grenzwerts ($b^*$) im Vergleich zu den anderen im Rahmen der Zugangskontrollen verwendeten Grenzwerten zu der höchsten Wahrscheinlichkeit ($p_b^*$) für eine Nichtzulassung von Verkehr führt, die Übertragungskapazität ($c_u(b^*)$) erhöht wird, falls auf den für die Übertragung von aufgrund der Zugangskontrolle zugelassenen Verkehrs verwendeten Links (l) eine der anteiligen Erhöhung der Übertragungskapazität entsprechende freie Kapazitätsmenge ($c_u^{free}(l)$) zur Verfügung steht.

2. Verfahren nach Anspruch 1,
   **dadurch gekennzeichnet, dass**

   - innerhalb des Netzes Verkehrsverteilung vorgenommen wird und
   - eine Zuweisung des Übertragungskapazitätsanteils ($c''(b^*)$) erfolgt, falls auf den für die Übertragung von aufgrund der Zugangskontrolle zugelassenen Verkehrs verwendeten Links (1) eine einem nach Maßgabe des über den jeweiligen Link (1) übertragenen Anteils ($u(l,b^*)$) des Verkehrs reduzierten Kapazitätsanteil ($c_u^{inc} * u(l,b^*)$) entsprechende freie Kapazitätsmenge ($c_u^{free}(l)$) zur Verfügung steht.

3. Verfahren nach einem der vorhergehenden Ansprüche, **dadurch gekennzeichnet, dass**

   - das Verfahren für eine Anzahl von für Zulassungskontrollen verwendete Grenzwerte ($b \in B_{hot}$) durchgeführt wird, wobei iterativ das Verfahren jeweils für einen bzw. den Grenzwert (b) aus der Menge der berücksichtigten Grenzwerte ($B_{hot}$) mit der höchsten Wahrscheinlichkeit ($p_b$) für eine Nichtzulassung von Verkehr durchgeführt wird, und wobei ein Grenzwert (b), bei dem eine Zuweisung des Übertragungskapazitätsanteils ($c_u(b)$) mangels freier Übertragungskapazität ($c_u^{free}(l)$) nicht erfolgt, bei folgenden Iterationen nicht mehr berücksichtigt wird.

4. Verfahren nach einem der vorhergehenden Ansprüche, **dadurch gekennzeichnet, dass**

   - für einen Grenzwert (b), dem ein Übertragungskapazitätsanteil ($c_u(b)$) zugewiesen wurde, die Wahrscheinlichkeit ($p_b$) für eine Nichtzulassung von Verkehr neu auf Grundlage der dem Grenzwert (b) zugewiesenen Gesamtübertragungskapazität berechnet wird.

5. Verfahren nach einem der vorhergehenden Ansprüche, **dadurch gekennzeichnet, dass**

   - der Übertragungskapazitätsanteil ($c_u(b^*)$) für die Zuweisung zu dem Grenzwert ($b^*$) nach Maßgabe des Anteils des erwarteten Verkehrsaufkommens ($a(b^*)$), welcher der Zugangskontrolle mittels des Grenzwertes ($b^*$) unterzogen wird, festgesetzt wird.

6. Verfahren nach einem der vorhergehenden Ansprüche, **dadurch gekennzeichnet, dass**

   - der Übertragungskapazitätsanteil ($c_u(b)$) gleich einem minimalen Übertragungskapazitätsinkrement (1) oder proportional dem Anteil des erwarteten Verkehrsaufkommens (a(b)), welcher der Zugangskontrolle mittels des Grenzwertes (b) unterzogen wird, festgesetzt wird.

7. Verfahren nach Anspruch 6,
   **dadurch gekennzeichnet, dass**

- der Übertragungskapazitätsanteil ($c_u$(b)) proportional dem Produkt aus

-- dem Anteil des erwarteten Verkehrsaufkommens (a(b)), welcher der Zugangskontrolle mittels des Grenzwertes (b) unterzogen wird, und

-- dem Quotienten (q(l)) aus der gesamten freien Kapazität ($c_u^{free}$(l)) auf einem Link (l) und einem aggregierten erwarteten Verkehrsaufkommen ($a_{not}$(l)) auf diesem Link (l) festgesetzt wird.

**8.** Verfahren nach Anspruch 7,
**dadurch gekennzeichnet, dass**

- der Übertragungskapazitätsanteil ($c_u$(b*)) proportional dem Minimum einer Menge von entsprechend Anspruch 7 gebildeten Produkten festgesetzt wird, wobei die Menge die Produkte für die zum Transport des aufgrund der Zugangskontrolle zugelassenen Verkehrs verwendeten Links (l mit u(l,b*) > 0) enthält.

**9.** Verfahren nach einem der Ansprüche 7 oder 8,
**dadurch gekennzeichnet, dass**

- der Übertragungskapazitätsanteil ($c_u$(b*)) gleich einem entsprechend Anspruch 7 gebildeten Produkt festgesetzt wird,
- die Wahrscheinlichkeit ($p_b$*) für eine Nichtzulassung von Verkehr bei einer Zugangskontrolle mittels des Grenzwertes (b*), nachdem ihm der entsprechende Übertragungskapazitätsanteil ($c_u$(b*)) zugewiesen wurde, berechnet wird,
- für eine Anzahl von für Zugangskontrollen verwendete weitere Grenzwerte (b aus $B_{hot}$(1)) jeweils ein Übertragungskapazitätsanteil ($c_u$(b)) analog mittels des entsprechend Anspruch 7 gebildeten Produkts definiert wird und die zugehörige Wahrscheinlichkeit ($p_b$) für eine Nichtzulassung von Verkehr bei einer Zugangskontrolle mittels des Grenzwertes (b) berechnet wird und
- der Übertragungskapazitätsanteil ($c_u$(b*)) schrittweise dekrementiert und die entsprechende Wahrscheinlichkeit ($p_b$*) für eine Nichtzulassung von Verkehr bei einer Zugangskontrolle mittels des Grenzwertes (b*) neu berechnet wird, bis die Wahrscheinlichkeit ($p_b$*) für eine Nichtzulassung von Verkehr bei einer Zugangskontrolle mittels des Grenzwertes (b*) größer oder gleich der berechneten Wahrscheinlichkeiten ($p_b$) für eine Nichtzulassung von Verkehr bei Zugangskontrollen mittels der weiteren Grenzwerte (b aus $B_{hot}$(1)) ist.

**10.** Verfahren nach einem der vorhergehenden Ansprüche, **dadurch gekennzeichnet, dass**

- für eine Menge (S) von Störszenarien (s), welche durch Ausfall wenigstens eines Knotens oder wenigstens eines Links (1) des Kommunikationsnetzes gegeben sind, ein Wert für den Übertragungskapazitätsanteil ($c_u$(s,b)) ermittelt wird und
- der Übertragungskapazitätsanteil ($c_u$(b)*) gleich dem Minimum der ermittelten Werte für den Übertragungskapazitätsanteil ($c_u$(s,b)) festgesetzt wird.

**11.** Verfahren nach einem der vorhergehenden Ansprüche, **dadurch gekennzeichnet, dass**

- für eine Menge (S) von Störszenarien (s), welche durch Ausfall wenigstens eines Knotens oder wenigstens eines Links (1) des Kommunikationsnetzes gegeben sind, ein Wert für den Übertragungskapazitätsanteil ($c_u$(s,b)) ermittelt wird, indem

-- der Wert für den Übertragungskapazitätsanteil ($c_u$(s,b)) proportional dem Produkt aus
-- dem Anteil des erwarteten Verkehrsaufkommens (a(b*)), welcher der Zugangskontrolle mittels des Grenzwertes (b*) unterzogen wird, und
-- dem Quotienten (q(s,l)) aus der gesamten freien Kapazität ($c_u^{free}$(s,l)) auf einem Link (l) und einem aggregierten erwarteten Verkehrsaufkommen ($a_{hot}$(s,l)) auf diesem Link (1) im Falle des Störszenarios (s) festgesetzt wird, und

- der Übertragungskapazitätsanteil ($c_u$(b*)) gleich dem Minimum der für den Übertragungskapazitätsanteil ($c_u$(b*)) ermittelten Werte festgesetzt wird.

**12.** Verfahren nach Anspruch 11,
**dadurch gekennzeichnet, dass**

die Schritte entsprechend Anspruch 11 für alle zum Transport des aufgrund der Zugangskontrolle zugelassenen Verkehrs verwendeten Links (1 mit u(l,b*) > 0) durchgeführt wird und der Übertragungskapazitätsanteil ($c_u$(b*)) gleich dem Minimum der für die verschiedenen Links (l) und die Störszenarien (s) ermittelten Werte festgesetzt wird.

13. Verfahren nach einem der Ansprüche 11 oder 12,
    **dadurch gekennzeichnet, dass**
    der Übertragungskapazitätsanteil ($c_u$(b*)) gleich einem minimalen Kapazitätsinkrement (1) festgesetzt wird, falls dieses größer als der nach Anspruch 11 oder 12 ermittelte Übertragungskapazitätsanteil ist.

**Claims**

1. Method for allocating transmission capacity ($c_u$(b*)) to a limit value (b*) for limiting traffic in a communication network, formed by nodes and links (l), with access controls which are based on a set (B) of limit values (b) and which have associated transmission capacities ($c_u$(b)) on the basis of an expected volume of traffic (a(b)), **characterized in that**

   - the transmission capacity ($c_u$(b*)) is increased for that limit value (b*) from the set of limit values (B) which, on the basis of expected volume of traffic (a(b*)), results in the highest probability ($p_b$*) of traffic not being admitted during an access control by means of the limit value (b*) in comparison with the other limit values used for the access controls if a free capacity volume ($c_u^{free}$(1)) that corresponds to the proportional increase in the transmission capacity is available on the links (l) used for transmitting traffic that is admitted on the basis of the access control.

2. Method according to Claim 1,
   **characterized in that**

   - traffic distribution is performed within the network and
   - the transmission capacity proportion ($c_u$(b*)) is allocated if a free capacity volume ($c_u^{free}$(l)) that corresponds to a capacity proportion ($c_u^{inc}$ * (u(l,b*)) that has been reduced on the basis of the proportion (u(l,b*)) of the traffic that is transmitted by the respective link (l) is available on the links (l) used for transmitting traffic that is admitted on the basis of the access control.

3. Method according to one of the preceding claims, **characterized in that**

   - the method is carried out for a number of limit values (b $\varepsilon$ $B_{hot}$) that are used for admission controls, wherein the method is iteratively carried out in each case for a or the limit value (b) from the set of limit values ($B_{hot}$) considered with the highest probability ($p_b$) of traffic not being admitted, and wherein a limit value (b) for which the transmission capacity proportion ($c_u$(b)) is not allocated on account of a lack of free transmission capacity ($c_u^{free}$(l)) is no longer considered for subsequent iterations.

4. Method according to one of the preceding claims, **characterized in that**

   - the probability ($p_b$) of traffic not being admitted is recalculated for a limit value (b) to which a transmission capacity proportion ($c_u$(b)) has been allocated on the basis of the total transmission capacity that has been allocated to the limit value (b).

5. Method according to one of the preceding claims, **characterized in that**

   - the transmission capacity proportion ($c_u$(b*)) for allocation to the limit value (b*) is stipulated on the basis of the proportion of the expected volume of traffic (a(b*)) which is subjected to the access control by means of the limit value (b*).

6. Method according to one of the preceding claims, **characterized in that**

   - the transmission capacity proportion ($c_u$(b)) is stipulated to be equal to a minimum transmission capacity increment (1) or proportional to the proportion of the expected volume of traffic (a(b)) which is subjected to the access control by means of the limit value (b).

7. Method according to Claim 6,
   **characterized in that**

   - the transmission capacity proportion ($c_u(b)$) is stipulated to be proportional to the product of

     -- the proportion of the expected volume of traffic ($a(b)$) which is subjected to the access control by means of the limit value ($b$) and
     -- the quotient ($q(l)$) of the total free capacity ($c_u^{free}(l)$) on a link ($l$) and an aggregated expected volume of traffic ($a_{hot}(l)$) on this link($l$)).

8. Method according to Claim 7,
   **characterized in that**

   - the transmission capacity proportion ($c_u(b^*)$) is stipulated to be proportional to the minimum of a set of products formed in accordance with Claim 7, wherein the set contains the products for the links (1 with $u(l,b^*) > 0$) that are used for transporting the traffic that is admitted on the basis of the access control.

9. Method according to either of Claims 7 and 8, **characterized in that**

   - the transmission capacity proportion ($c_u(b^*)$) is stipulated to be equal to a product formed in accordance with Claim 7,
   - the probability ($p_b^*$) of traffic not being admitted during an access control by means of the limit value ($b^*$) after the relevant transmission capacity proportion ($c_u(b^*)$) has been allocated to said limit value is calculated,
   - a transmission capacity proportion ($c_u(b)$) is respectively defined in a similar manner by means of the product formed in accordance with Claim 7 for a number of further limit values ($b$ from $B_{hot}(l)$) that are used for access controls, and the associated probability ($p_b$) of traffic not being admitted during an access control by means of the limit value ($b$) is calculated, and
   - the transmission capacity proportion ($c_u(b^*)$) is decremented in steps and the relevant probability ($p_b^*$) of traffic not being admitted during an access control by means of the limit value ($b^*$) is recalculated until the probability ($p_b^*$) of traffic not being admitted during an access control by means of the limit value ($b^*$) is greater than or equal to the calculated probabilities ($p_b$) of traffic not being admitted during access controls by means of the further limit values ($b$ from $B_{hot}(1)$).

10. Method according to one of the preceding claims, **characterized in that**

    - a value for the transmission capacity proportion ($c_u(s,b)$) is ascertained for a set ($S$) of disturbance scenarios ($s$) which have arisen as a result of failure of at least one node or at least one link ($l$) in the communication network, and
    - the transmission capacity proportion ($c_u(b)^*$) is stipulated to be equal to the minimum of the ascertained values for the transmission capacity proportion ($c_u(s,b)$).

11. Method according to one of the preceding claims, **characterized in that**

    - a value for the transmission capacity proportion ($c_u(s,b)$) is ascertained for a set ($S$) of disturbance scenarios ($s$) which have arisen as a result of failure of at least one node or at least one link (1) in the communication network by virtue of

      -- the value for the transmission capacity proportion ($c_u(s,b)$) being stipulated to be proportional to the product of
      -- the proportion of the expected volume of traffic ($a(b^*)$) which is subjected to the access control by means of the limit value ($b^*$) and
      -- the quotient ($q(s,l)$) of the total free capacity ($c_u^{free}(s,l)$) on a link ($l$) and an aggregated expected volume of traffic ($a_{hot}(s,l)$) on this link ($l$) in the case of the disturbance scenario ($s$), and

    - the transmission capacity proportion ($c_u(b^*)$) being stipulated to be equal to the minimum of the values ascertained for the transmission capacity proportion ($c_u(b^*)$).

12. Method according to Claim 11,

EP 1 700 434 B1

**characterized in that**
the steps in accordance with Claim 11 are performed for all of the links (l with u(l,b*) > 0) that are used for transporting the traffic that is admitted on the basis of the access control, and the transmission capacity proportion ($c_u(b^*)$) is stipulated to be equal to the minimum of the values ascertained for the various links (1) and the disturbance scenarios (s).

13. Method according to either of Claims 11 and 12,
**characterized in that**
the transmission capacity proportion ($c_u(b^*)$) is stipulated to be equal to a minimum capacity increment (1) if the latter is greater than the transmission capacity proportion ascertained according to Claim 11 or 12.


**Revendications**

1. Procédé pour allouer, sur la base d'un volume de trafic attendu (a(b)), une capacité de transmission ($c_u(b^*)$) à une valeur limite (b*) pour limiter le trafic dans un réseau de communication formé par de noeuds et de liens (1), avec des contrôles d'accès reposant sur un ensemble (B) de valeurs limites (b) et auxquels sont associées des capacités de transmission ($c_u(b)$), **caractérisé en ce que**, pour la valeur limite (b*) de l'ensemble des valeurs limites (B) qui entraîne la probabilité maximale ($p_b^*$) d'une non-autorisation de trafic compte tenu du volume de trafic attendu (a(b*)) lors d'un contrôle d'accès au moyen de la valeur limite (b*) en comparaison avec les autres valeurs limites utilisées dans le cadre des contrôles d'accès, la capacité de transmission ($c_u(b^*)$) est augmentée si un volume de capacité libre ($c_u^{free}(l)$) correspondant à l'augmentation proportionnelle de la capacité de transmission est disponible sur les liens (1) utilisés pour la transmission de trafic autorisé sur la base du contrôle d'accès.

2. Procédé selon la revendication 1, **caractérisé en ce que** :

   - une répartition du trafic est effectuée dans le réseau et
   - la fraction de capacité de transmission (cu(b*)) est allouée si un volume de capacité ($c_u^{free}(l)$) correspondant à une fraction de capacité ($c_u^{inc} * u(l,b^*)$) réduite compte tenu de la fraction (u(l,b*)) transmise via le lien (1) respectif est disponible sur les liens (1) utilisés pour la transmission de trafic autorisé sur la base du contrôle d'accès.

3. Procédé selon l'une des revendications précédentes, **caractérisé en ce que** le procédé est exécuté pour un nombre de valeurs limites ($b \in B_{hot}$) utilisées pour des contrôles d'accès, le procédé étant exécuté itérativement respectivement pour une resp. pour la valeur limite (b) de l'ensemble des valeurs limites prises en compte ($B_{hot}$) avec la probabilité maximale ($p_b$) d'une non-autorisation de trafic, et une valeur limite (b) à laquelle une allocation de la fraction de capacité de transmission ($c_u(b)$) n'a pas lieu à défaut de capacité de transmission libre ($c_u^{free}(l)$) n'étant plus prise en compte aux itérations suivantes.

4. Procédé selon l'une des revendications précédentes, **caractérisé en ce que**, pour une valeur limite (b) à laquelle une fraction de capacité de transmission ($c_u(b)$) a été allouée, la probabilité ($p_b$) d'une non-autorisation de trafic est recalculée sur la base de la capacité de transmission totale allouée à la valeur limite (b).

5. Procédé selon l'une des revendications précédentes, **caractérisé en ce que** la fraction de capacité de transmission ($c_u(b^*)$) pour l'allocation à la valeur limite (b*) est fixée compte tenu de la fraction du volume de trafic attendu (a(b*)) qui est soumise au contrôle d'accès au moyen de la valeur limite (b*).

6. Procédé selon l'une des revendications précédentes, **caractérisé en ce que** la fraction de capacité de transmission ($c_u(b)$) est fixée de manière à être égale à un incrément de capacité de transmission minimal (1) ou proportionnelle à la fraction du volume de trafic attendu (a(b)) qui est soumise au contrôle d'accès au moyen de la valeur limite (b).

7. Procédé selon la revendication 6, **caractérisé en ce que** la fraction de capacité de transmission ($c_u(b)$) est fixée proportionnellement au produit

   - de la fraction du volume de trafic attendu (a(b)) qui est soumise au contrôle d'accès au moyen de la valeur limite (b) et
   - du quotient (q(l)) de la capacité libre totale ($c_u^{free}(l)$) sur un lien (1) et d'un volume de trafic attendu agrégé ($a_{hot}(l)$) sur ce lien (1).

**EP 1 700 434 B1**

8. Procédé selon la revendication 7, **caractérisé en ce que** la fraction de capacité de transmission ($c_u(b^*)$) est fixée proportionnellement au minimum d'un ensemble de produits formés conformément à la revendication 7, l'ensemble contenant les produits pour les liens (1 avec $u(l,b^*) > 0$) utilisés pour le transport du trafic autorisé sur la base du contrôle d'accès.

9. Procédé selon l'une des revendications 7 ou 8, **caractérisé en ce que** :

   - la fraction de capacité de transmission ($cu(b^*)$) est fixée de manière à être égale à un produit formé conformément à la revendication 7 ;
   - est calculée la probabilité ($p_b{}^*$) d'une non-autorisation de trafic lors d'un contrôle d'accès au moyen de la valeur limite ($b^*$) après que lui a été allouée la fraction de capacité de transmission correspondante ($c_u(b^*)$) ;
   - respectivement une fraction de capacité de transmission ($c_u(b)$) est définie de manière analogue au moyen du produit formé conformément à la revendication 7 pour un nombre d'autres valeurs limites (b de $B_{hot}(l)$) utilisées pour des contrôles d'accès, et la probabilité associée ($p_b$) d'une non-autorisation de trafic lors d'un contrôle d'accès au moyen de la valeur limite (b) est calculée ; et
   - la fraction de capacité de transmission ($cu(b^*)$) est décrémentée pas à pas et la probabilité correspondante ($p_b{}^*$) d'une non-autorisation de trafic lors d'un contrôle d'accès au moyen de la valeur limite ($b^*$) est recalculée jusqu'à ce que la probabilité ($p_b{}^*$) d'une non-autorisation de trafic lors d'un contrôle d'accès au moyen de la valeur limite ($b^*$) soit supérieure ou égale aux probabilités calculées ($p_b$) d'une non-autorisation de trafic lors de contrôles d'accès au moyen des autres valeurs limites (b de $B_{hot}(1)$).

10. Procédé selon l'une des revendications précédentes, **caractérisé en ce que** :

   - pour un ensemble (S) de scénarios de perturbation (s) résultant de la défaillance d'au moins un noeud ou d'au moins un lien (1) du réseau de communication, une valeur de la fraction de capacité de transmission ($c_u(s,b)$) est déterminée et
   - la fraction de capacité de transmission ($c_u(b)^*$) est fixée de manière à être égale au minimum des valeurs déterminées pour la fraction de capacité de transmission ($c_u(s,b)$).

11. Procédé selon l'une des revendications précédentes, **caractérisé en ce que** :

   - pour un ensemble (S) de scénarios de perturbation (s) résultant de la défaillance d'au moins un noeud ou d'au moins un lien (1) du réseau de communication, une valeur de la fraction de capacité de transmission ($c_u(s,b)$) est déterminée par
   - fixation de la valeur de la fraction de capacité de transmission ($c_u(s,b)$) proportionnellement au produit

     -- de la fraction du volume de trafic attendu ($a(b^*)$) qui est soumise au contrôle d'accès au moyen de la valeur limite ($b^*$) et
     -- du quotient ($q(s,1)$) de la capacité libre totale ($c_u{}^{free}(s,l)$) sur un lien (l) et d'un volume de trafic attendu agrégé ($a_{hot}(s,l)$) sur ce lien (l) dans le cas du scénario de perturbation (s) et

   - fixation de la fraction de capacité de transmission ($c_u(b^*)$) de manière telle qu'elle soit égale au minimum des valeurs déterminées pour la fraction de capacité de transmission ($c_u(b^*)$).

12. Procédé selon la revendication 11, **caractérisé en ce que** les étapes selon la revendication 11 sont exécutées pour tous les liens (1 avec $u(l,b^*) > 0$) utilisés pour le transport du trafic autorisé sur la base du contrôle d'accès et la fraction de capacité de transmission ($c_u(b^*)$) est fixée de manière à être égale au minimum des valeurs déterminées pour les différents liens (1) et les scénarios de perturbation (s).

13. Procédé selon l'une des revendications 11 ou 12, **caractérisé en ce que** la fraction de capacité de transmission ($c_u(b^*)$) est fixée de manière a être égale à un incrément de capacité minimal (1) si celui-ci est supérieur à la fraction de capacité de transmission déterminée selon la revendication 11 ou 12.

**FIG 1**

Input: (implizit: Topologie, Routing, Budgets)

$B_{hot} := B$

while $B_{hot} \neq 0$ do

wähle $b^* \in B_{hot}$ mit der größten Blockierwahrscheinlichkeit

$\quad c_u^{inc} := 1$

$\quad$ if $(\forall l \in \mathcal{E} : c_u^{free}(l) \geq c_u^{inc} \cdot (l, b^*))$ then

$\quad\quad c_u[b^*] := c_u[b^*] + c_u^{inc}$

$\quad$ else

$\quad\quad B_{hot} := B_{hot} \backslash b^*$

$\quad$ end if

end while

Output: Zuweisung von Übertragungskapazitätsanteilen
$c_u[b]$, $b \in B$

**FIG 2**

Input: Link $l$ (implizit: Topologie, Routing, Budgets)

$\quad$ if $| \{b : b \in B_{hot} \wedge u(l, b) > 0\} | > 0$ then wähle

$\quad b^* \in B_{hot} : u(l, b^*) > 0$ mit der größten Blockierwahrscheinlichkeit

$\quad c_u^* := \lfloor q(l) \cdot a(b^*) \rfloor$

$\quad p_b^* := p_b(a(b^*), c_u[b^*] + c_u^*)$

$\quad$ for all $b \in \{b : b \in B_{hot} \wedge u(l, b) > 0\}$ do

$\quad\quad c_u^b := \lfloor q(l) \cdot a(b) \rfloor$

$\quad\quad p_b^b := p_b(a(b), c_u[b] + c_u^b)$

$\quad\quad$ while $p_b^* < p_b^b$ do

$\quad\quad\quad c_u^* := \lfloor q^{dec} \cdot c_u^* \rfloor$

$\quad\quad\quad p_b^* := p_b(a(b^*), c_u[b^*] + c_u^*)$

$\quad\quad$ end while

$\quad$ end for

$\quad$ else

$\quad\quad c_u^* := 0$

$\quad$ end if

Output: Übertragungskapazitätsinkrement $c_u^*$

# FIG 3

Input: (implizit: Topologie, Routing, Budgets)

for all $l \in \mathcal{E}$ do

$\qquad c_u^{inc}[l] := \text{CapInc}(l)$

end for

$B_{hot} := B$

while $B_{hot} \neq 0$ do

wähle $b^* \in B_{hot}$ mit der größten Blockierwahrscheinlichkeit

$c_u^{inc} := \max(1, \min_{l \in \mathcal{E}: u(l,b) > 0} c_u^{inc}[l])$

if $(\forall l \in \mathcal{E}: c_u^{free}(l) \geq c_u^{inc} \cdot u(l,b^*))$ then

$\qquad c_u[b^*] := c_u[b^*] + c_u^{inc}$

else

$\qquad B_{hot} := B_{hot} \setminus b^*$

end if

for all $l \in \mathcal{E}$ do

$\qquad$ if $u(l,b^*) > 0$ then

$\qquad\qquad c_u^{inc}[l] := \text{CapInc}(l)$

$\qquad$ end if

end for

end while

Output: Zuweisung von Übertragungskapazitätsanteilen

$c_u[b], b \in B$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03026229 A2

**In der Beschreibung aufgeführte Nicht-Patentliteratur**

- **KAUFMAN ; ROBERTS.** Broadband Network Teletraffic - Final Report of Action COST 242. Springer, 1996